# EUROPEAN PATENT SPECIFICATION

(11) **EP 4 455 168 B1**
(45) Date of publication and mention of the grant of the patent: **24.12.2025**
(21) Application number: 23170702.7
(22) Date of filing: 28.04.2023
(51) Int. Cl.: C08F 2/50, C08G 18/67, C08F 290/06, B33Y 70/00, C08F 2/48, C08F 220/34, C08F 222/10, C08G 18/73

(54) **VISIBLE LIGHT CURABLE COMPOSITION AND VISIBLE LIGHT CURABLE COMPOSITION POLYMERIZATION METHOD**
MIT SICHTBAREM LICHT HÄRTBARE ZUSAMMENSETZUNG UND VERFAHREN ZUR POLYMERISATION EINER MIT SICHTBAREM LICHT HÄRTBAREN ZUSAMMENSETZUNG
COMPOSITION DURCISSABLE À LA LUMIÈRE VISIBLE ET MÉTHODE DE POLYMÉRISATION D'UNE COMPOSITION DURCISSABLE À LA LUMIÈRE VISIBLE

(43) Date of publication of application: 30.10.2024
(73) Proprietor: CHT Turkey Kimya Sanayi ve Ticaret A.S., Istanbul (TR)
(72) Inventor: Akbulut, Hüseyin, Istanbul (TR); Dogan, Canan, Istanbul (TR); Kaya, Eyup, Istanbul (TR)
(74) Representative: Yavuzcan, Alev

(56) References cited:
- US-A1- 2005 197 422
- US-A1- 2022 411 560
- SATOU N ET AL: "In vitro color change of composite-based resins", DENTAL MATERIALS, ELSEVIER, AMSTERDAM, NL, vol. 5, no. 6, 1 November 1989 (1989-11-01), pages 384 - 387, XP024145601, ISSN: 0109-5641, [retrieved on 19891101], DOI: 10.1016/0109-5641(89)90105-X
- TZENG JY-JIUNN ET AL: "Synthesis, Characterization, and Visible Light Curing Capacity of Polycaprolactone Acrylate", vol. 2018, 8 May 2018 (2018-05-08), pages 1 - 8, XP055890825, ISSN: 2314-6133, Retrieved from the Internet <URL:https://downloads.hindawi.com/journals/bmri/2018/8719624.pdf> [retrieved on 20231012], DOI: 10.1155/2018/8719624
- YUNYUN BI: "VISIBLE LIGHT CURING OF FIBER-REINFORCED IMPACT- VISIBLE LIGHT CURING OF FIBER-REINFORCED IMPACT- RESISTANT COMPOSITES RESISTANT COMPOSITES", 16 December 2017 (2017-12-16), XP055843481, Retrieved from the Internet <URL:https://suny-esf-researchportal.esploro.exlibrisgroup.com/esploro/outputs/graduate/VISIBLE-LIGHT-CURING-OF-FIBER-REINFORCED-IMPACT-RESISTANT/99871108304826#file-0> [retrieved on 20210922]

## Description

### Technical Field

The invention relates to a visible light curable composition which enables curing of polymerizable structures under the sunlight and also ultraviolet (UV) light exposure without the dependency on photoinitiator type and to a method of polymerization of the composition.

In particular, the invention relates to a visible light curable composition which enables curing of polymerizable structures under the sunlight and ultraviolet (UV) light exposure without dependency on using visible light activated photoinitiators only, but enables that all types of UV light activated photoinitiators are able to start the polymerization process, and to a method of polymerization of the composition.

### State of the Art

Organic solvents or water are necessary to be utilized in most polymeric coating formulations to make the polymer composition soluble and adjust the viscosity to optimum level for conventional applications. Solvent-based systems suffer from the volatile organic chemicals (VOCs) which are the main driving force for the development effort of environmental-friendly coating technologies and the preparation of water-based systems requires specific chemical modifications in polymeric structure to obtain their stable dispersions. Moreover, the increase of crosslinking level in polymer has positive effect on the physical properties and durability of coating. However, the high-level crosslinking is decreasing the solubility of polymeric structure, especially in water-based systems there is very critical limit for crosslinking ratio to obtain stable products. Therefore, among the coating technologies, Ultraviolet (UV) curable polymeric coating or materials have been widely employed in broad range of applications of modern industry due to their advantages such as low energy consumption, fast curing rate, low capital investment, low volatile organic chemical (VOC) emissions and outstanding physical properties of coatings coming from high level of crosslinking. However, the biocompatibility and photochemical strategies are not strong enough in UV-mediated strategies.

On the other hand, visible light (sunlight) curable products are considered as state of art in photocurable systems which has the unmistakable advantage of being considerably more biocompatible and a spectrum of visible-light-driven methods is now available in literature. Although the photochemical strategies provide a powerful alternative approach with visible-light-rather than UV-mediated strategies, they require special photoinitiators, catalysts and curing equipment's which are not yet commercially feasible for many industries and their reaction yield mainly falls behind the conventional UV systems. It is quite apparent to those skilled that photopolymerization with visible light requires special category of photoinitiator systems exhibits high photosensitivity in visible light rays of 400 nm or upper zone.

A primer composition and a method of applying a primer composition to a substrate is disclosed in a patent document US2008138531A1 in the known state of the art. The document discloses a primer composition that can be cured by exposure to UV radiation having a very low UV-B content and substantially no UV-C content or under natural outdoor light within 2 to 5 minutes. The primer provides a tack free surface after curing under these conditions and exhibits good sanding characteristics, good hiding, and provides adhesion to cold rolled steel as well as e-coated substrates and substrates having aged coatings thereon. The primer coating composition comprises: A) one or more compounds containing one ethylenically unsaturated free-radically polymerizable group per molecule; B) one or more compounds containing two or more ethylenically unsaturated free radically polymerizable groups per molecule; C) one or more pigments, fillers and/or dyes; D) less than 1.0% of one or more photoinitiators; and compounds selected from volatile organic solvents and customary additives and mixtures thereof. The document does not mention a solution to obtain a visible light curable composition which enables curing of polymerizable structures under the sunlight and Ultraviolet (UV) light without dependency on using visible light activated photoinitiators only, nor a solution for the method of polymerization of the composition.

Another patent document JPH05117310A of the known art discloses a method of preparing a thermoset or thermoplastic polymer fiber comprising the following sequential steps: (i) providing a monomeric or oligomeric mixture, wherein said monomeric or oligomeric mixture comprises monomers or oligomers which polymerize by radiation; (ii) optionally heating or cooling said monomeric or oligomeric mixture for obtaining optimal viscosity; (iii) pumping said monomeric or oligomeric mixture through a spinneret, die or any other nozzle type; and (iv) radiating said monomeric or oligomeric mixture with a radiation source under room temperature, wherein said thermoset or thermoplastic polymer fibers are formed. The document does not mention a solution to obtain a visible light curable composition which enables curing of polymerizable structures under the sunlight and Ultraviolet (UV) light without dependency on using visible light activated photoinitiators only, nor a solution for the method of polymerization of the composition.

As a result, there is a need to develop a visible light curable composition which enables curing of polymerizable structures under the sunlight and Ultraviolet (UV) light without dependency on using visible light activated photoinitiators only, but enables that all types of activated photoinitiators are able to start the polymerization, and a photopolymerization method which enables polymerization without the dependency on photoinitiator type. US2005197422A1 discloses visible light curable compositions comprising a prepolymer of polycaprolactone triol with MLDI using camphorquinone and N,N dimethyl amino ethyl methacrylate as initiators.

### Purpose of the Invention

The present invention relates to a visible light curable composition and a method of photopolymerizing of the composition, which fulfills the above-mentioned requirements, eliminates possible disadvantages and provides some additional advantages.

The main purpose of the inventive visible light curable composition and visible light curable composition photopolymerization method is to obtain a visible light curable composition which enables curing of polymerizable structures under the sunlight and Ultraviolet (UV) light without dependency on a specific photoinitiator type.

Another object of the invention is to provide a visible light curable composition and a method of photopolymerization thereof, enabling that all types of activated photoinitiators are able to start the polymerization process.

Another object of the invention is to provide a visible light curable composition and a method of photopolymerization thereof, selecting tertiary amine functional polymerizable monomers as main monomer and photopolymerization promoter to obtain crosslinked polymers.

Another object of the invention is to provide a visible light curable composition and a method of photopolymerization thereof, enabling tertiary amines and quaternary salts of tertiary amines functional polymerizable monomers are behaved as monomer and also photopolymerization promotor/synergists are utilized as main component in the composition.

Another object of the invention is to provide a visible light curable composition and a method of photopolymerization thereof, which enables polymerization of tertiary amine functional polymerizable monomers and their compositions are proceed the controlled polymerization, therefore under the sunlight the polymerization starts and in the dark the polymerization stops.

Another object of the invention is to provide a visible light curable composition and a method of photopolymerization thereof, obtaining thermoset/thermoplastic coatings or polymers such as 2K polyurethanes and epoxy systems which require the mixture of multiple components and the control on polymerization and viscosity is impossible by providing one component system with controllability on polymerization.

Another object of the invention is to provide a visible light curable composition and a method of photopolymerization thereof, using the tertiary amines contained monomers as solvent to synthesis monomeric, oligomeric and polymeric urethane-acrylate structures to obtain water and solvent free sunlight curable compositions.

In order to achieve the above objects in the most general form, the visible light curable composition developed in accordance with the present invention, enables the curing process of polymerizable structures under the ultraviolet light and sunlight exposure by using any type of photoinitiator. It comprises at least one tertiary amine functional polymerizable monomer characterized in that the tertiary amine functional polymerizable monomer is selected to behave as main monomer and also photopolymerization promotor/synergist for chain transfer reaction under the ultraviolet light or sunlight exposure to form network polymers in the presence of any type of photoinitiator.

A method of preparing a visible light curable composition developed in accordance with the present invention, wherein the visible light curable composition is cured by using any type of photoinitiator, comprising the steps of using the tertiary amines monomer as solvent to synthesis various different monomeric, oligomeric and polymeric urethane-acrylate structures, obtaining visible light curable composition, characterized in that the composition is water and solvent free.

A method of polymerization of a composition developed in accordance with the present invention, wherein the visible light curable composition is cured by using any type of photoinitiator, comprising the steps of adding at least one tertiary amine functional polymerizable monomer and at least one photoinitiator, selecting the tertiary amine functional polymerizable monomer as main monomer and photopolymerization promoter, curing the composition under the ultraviolet light or sunlight exposure, initiating and starting chain transfer reaction under the ultraviolet light or sunlight exposure to form network polymers and obtaining crosslinked polymers, characterized in that the photoinitiator is not a visible light activated photoinitiator.

The structural and characteristic features and all advantages of the invention will be more clearly understood by means of the graphs given below and the detailed description written by making references to these graphs, and therefore, the evaluation should be made by considering these graphs and detailed description.

### Detailed Description of the Invention

In this detailed description, the preferred embodiments of the inventive visible light curable composition and the method of photopolymerization are described only for a better understanding of the subject matter.

A visible light curable composition developed in accordance with the present invention, enables the curing process of polymerizable structures under the ultraviolet light and sunlight exposure by using any type of photoinitiator, preferably without the dependency on visible light activated photoinitiators comprises at least one tertiary amine functional polymerizable monomer, preferably at least one quaternary salts of tertiary amines functional polymerizable monomer, characterized in that the tertiary amine functional polymerizable monomer is selected to behave as main monomer and also photopolymerization promotor/synergist for chain transfer reaction under the ultraviolet light or sunlight exposure to form network polymers in the presence of any type of photoinitiator.

In an exemplary embodiment of the visible light curable composition developed with the present invention, it is provided that a highly sensitive photopolymerizable compositions, more specifically, a photopolymerizable composition comprising tertiary amine functional polymerizable monomers illustrated in Graph 1, photoinitiators regardless of their types and any polymerizable additives to diversify the product range with this concept and to meet the desired physical property.

A method of preparing a visible light curable composition developed in accordance with the present invention, wherein the visible light curable composition is cured by using any type of photoinitiator, comprising the steps of using the tertiary amines monomer as solvent to synthesise

monomeric, oligomeric and polymeric urethane-acrylate structures, obtaining water and solvent free visible light curable compositions. 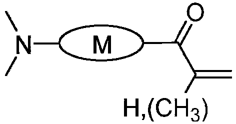
M= Alkyl-, Ester, Amide,
Polyester, Polyether etc...

### Tertiary Amine Functional Polymerizable Monomer

Graph 1: Graphical representation of the tertiary amine functional polymerizable monomer.

The composition provides a photopolymerization method which is based on polymerization of tertiary amine functional monomers under the UV or sunlight (visible light) exposure without the dependency on photoinitiator type, and also the distinctly novel strategy to perform photopolymerization with tertiary amine functional polymerizable monomers and their combination of various type of polymerizable structures using any type of photoinitiator under the sunlight (visible light) exposure. Even the photoinitiators which can only be activated by ultraviolet light rays of 300 nm or sub-zone, are also suitable for the composition.

A method of polymerization of a composition developed in accordance with the present invention, wherein the visible light curable composition is cured by using any type of photoinitiator, comprising the steps of adding at least one tertiary amine functional polymerizable monomer and at least one photoinitiator, selecting the tertiary amine functional polymerizable monomer as main monomer and photopolymerization promoter, curing the composition under the ultraviolet light or sunlight exposure, initiating and starting chain transfer reaction under the ultraviolet light or sunlight exposure to form network polymers and obtaining crosslinked polymers, characterized in that the photoinitiator is not a visible light activated photoinitiator.

The tertiary amine functional polymerizable monomers can act as polymerization promoter. The mechanism of their promoting ability of tertiary amine functional polymerizable monomer, forming a redox pair with Potassium Persulfate as radical source, plays a key role in the initiating and starting chain transfer reaction to form network polymer at room temperature as shown in Graph 2.

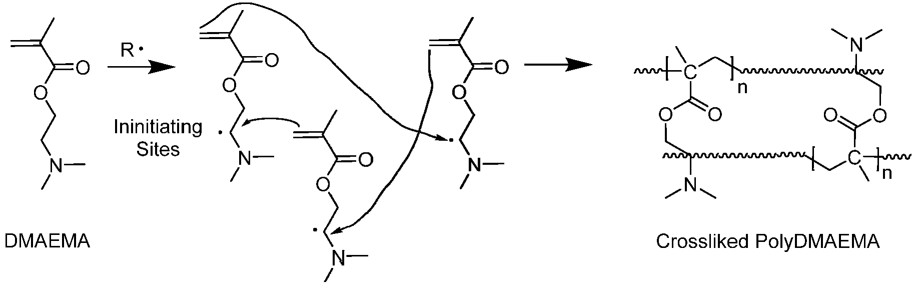

Graph 2: Graphical representation of the tertiary amine functional polymerizable monomer starting chain transfer reaction to form network polymer.

The present invention discloses that tertiary amine functional polymerizable monomers are able to act as both monomer and promoter for chain transfer reaction under the UV or sunlight exposure to form network polymers in the presence of any type of photoinitiator. Because of high reactivity of compositions, even under the sunlight that just consists of averagely 5% of UV light, the compositions of the present invention can be cured to obtain network polymers in any intensity of sunlight.

Another ability achieved by the composition is the control of the polymerization that can be stopped and reinitiated under external control. To perform the controlled polymerization, commercially available tertiary amine functional polymerizable monomers, Dimethylaminoethyl Methacrylate (DMAEMA), is used to prepare sunlight curable composition by mixing with photoinitiator. Graph 3 shows the reaction pathway for the controlled polymerization reaction of DMAEMA with 3% photoinitiator under the sunlight exposure at 25°C and the behaviors of viscosity in dark and sunlight is graphed. The sunlight is initiating the polymerization reaction and when sunlight exposure cut off, polymerization is stopped, and the viscosity remain stable. In the end of the polymerization, depending on the type of tertiary amine functional monomer and additives, variety of thermoset or thermoplastic polymers are obtained.

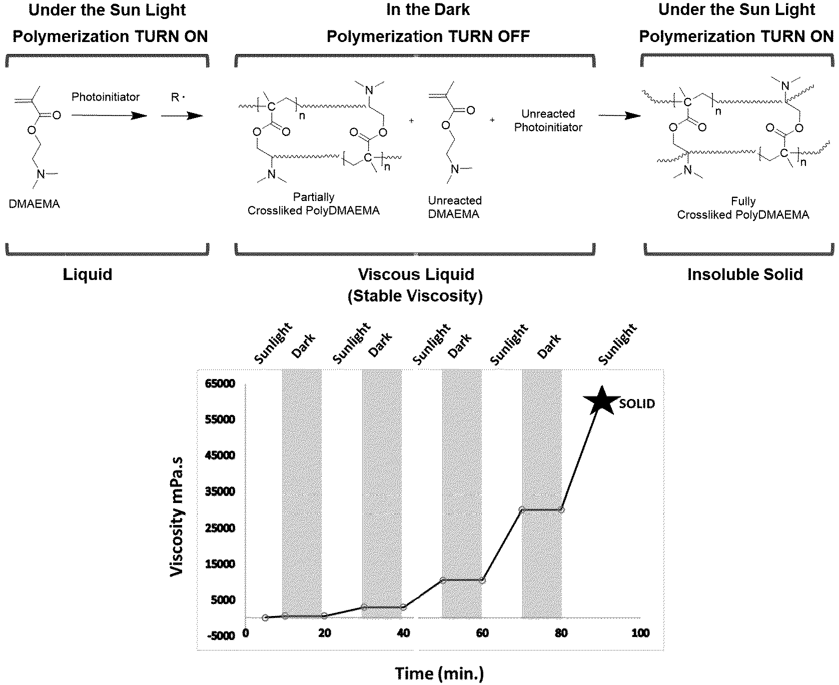

Graph 3: Graphical representation of the reaction pathway for the controlled polymerization reaction of DMAEMA with 3% photoinitiator under the sunlight exposure.

This start-stop feature of the polymerization is unique advantage to prepare sunlight curable compositions in specific viscosity for different applications before obtaining final thermoset or thermoplastic polymer. For instance, the viscosity of DMAEMA and photoinitiator mixture is around 105 mPa.s at 25°C which is not suitable for lamination on some surface due to high fluidity. However, the viscosity of mixture can be increased in controlled way to sufficient level for lamination under the UV or sunlight exposure and this viscosity can be kept stable in lack of UV or sunlight exposure.

In another preferred embodiment of the invention, a promising alternative method is provided for conventional thermoplastic and thermoset coating systems such as epoxy and 2K polyurethane. These systems are working with second component to start polymerization, epoxy resins with amine containing hardeners and 2K polyurethane should be the combination of polyols and polyisocyanate. When these components are mixed, there is a limited time range for application, because the reaction between the mixed components will start immediately and there is no control on viscosity and polymerization. Therefore, the present invention is eliminating the disadvantages conventional thermoset/thermoplastic coating system mentioned above by providing one component system with controllability on polymerization.

In another preferred embodiment of the invention, the tertiary amine functional polymerizable monomers is utilized as a solvent for the synthesis of monomeric, oligomeric and polymeric acrylate-urethane-based crosslinkers and after completion of the reactions, the tertiary amine monomers, which are not eliminated, are used as a part of polymerization composition as illustrated in Graph 4.

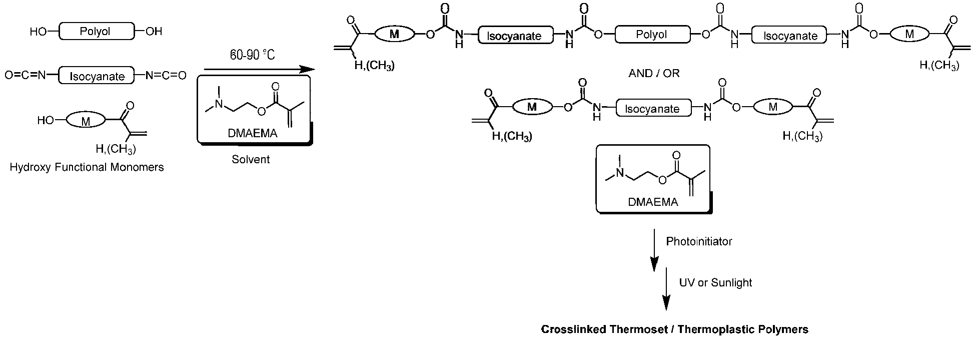

Graph 4: Graphical representation of the reaction pathway for the tertiary amine functional polymerizable monomers is utilized as a solvent for the synthesis.

In another preferred embodiment of the invention, the tertiary amine functional monomers also act as catalyst in the urethane synthesis due to their amount which is considerable high comparing the usage amount of conventional urethane catalysts, creating enough basic environment in reaction media, is adjusted about 5% to 90% depending on their type of composition and desired viscosity and properties of obtained polymer.

In another preferred embodiment of the invention, Quaternary ammonium salt of tertiary amine functional monomers and their combination with carboxylic acid functional monomer are able to form deep eutectic solvents (DES) which are a new class of green electrolyte materials with properties analogous to that of Ionic Liquids. In Graph 5, the preferred DES combination is illustrated, consisting of [2-(Acryloyloxy)ethyl] trimethylammonium chloride as hydrogen acceptor and Acrylic Acid as hydrogen donor components to obtain all-component-polymerizable DES at room temperature, exhibits extreme reactivity and fast photopolymerization rate under the sunlight with any type of photoinitiators, results in crosslinked polymer with thermoset / thermoplastic properties. The obtained polymerizable DES composition is very reactive comparing to their corresponding tertiary amine derivatives due to their carboxylic acid monomer content which are in the class of highly reactive monomers and ionic interaction between hydrogen atoms of carboxylic acid monomers and halogen atoms of quaternary moiety, accelerating the formation of crosslinked solid polymeric structure.

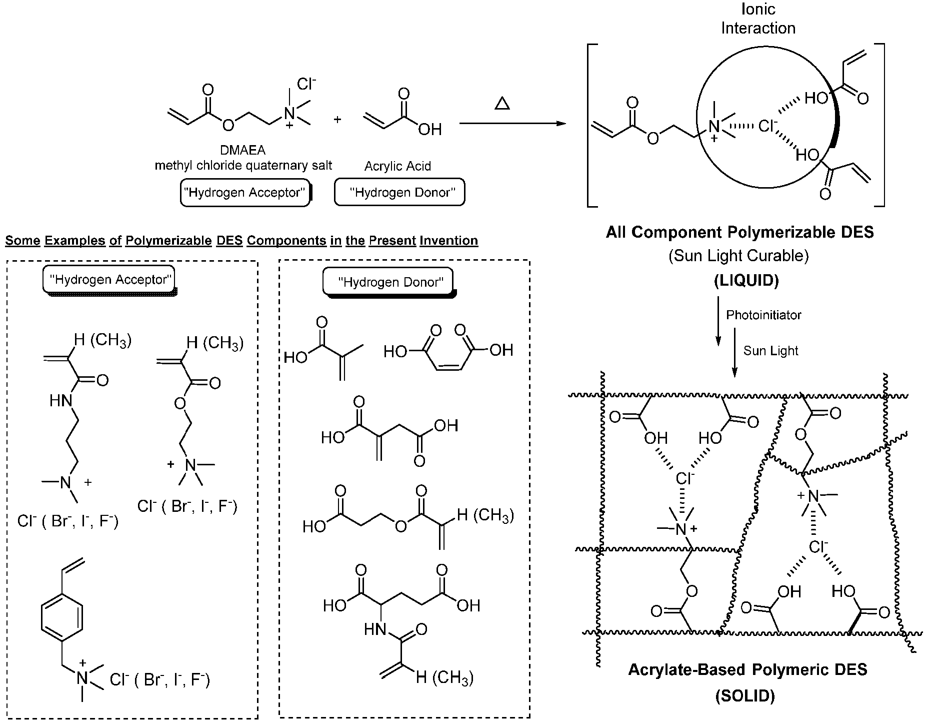

Graph 5: Graphical representation of the reaction pathway for the preferred DES consisting of [2-(Acryloyloxy)ethyl] trimethylammonium chloride as hydrogen acceptor and Acrylic Acid as hydrogen donor components.

In another preferred embodiment of the invention, the compositions of sunlight curable all component polymerizable DES are described as unique concept to obtain thermoset/thermoplastic polymers having ionic interactions inside the polymeric networks. Before curing under the sunlight exposure, these DES compositions can be used as solvent to dissolve various additives, materials, polymers etc. to obtain infinite number of thermoset / thermoplastic polymers and composites with endless possibilities. It is apparent to those skilled that sunlight curable all-component DES compositions of the present invention can have application in production 3D printing materials, electronic equipment's, battery and solar panel and other related area that ionic moiety containing polymer is used.

In another preferred embodiment of the invention, the tertiary amine functional polymerizable monomer is selected from 2-N-Morpholinoethyl methacrylate, 2-N-Morpholinoethyl acrylate, 2-Diisopropylaminoethyl methacrylate, 2-Diisopropylaminoethyl acrylate, N-[3-(N,N-Dimethylamino)propyl] methacrylamide, N-[3-(N,N-Dimethylamino)propyl] acrylamide, N-[2-(N,N-Dimethylamino)ethyl] methacrylamide, N-[2-(N,N-Dimethylamino)ethyl] acrylamide, 2-(N,N-Dimethylamino)ethyl acrylate, 2-(N,N-Dimethylamino)ethyl methacrylate, 2-(N,N-Diethylamino)ethyl methacrylate, 2-(N,N-Diethylamino)ethyl acrylate, 2-(tert-Butylamino)ethyl methacrylate, 2-(tert-Butylamino)ethyl acrylate, 2-(N,N-Dimethylamino)ethyl methacrylate, 2-(N,N-Dimethylamino)ethyl acrylate, and all related monomers, oligomers and polymers

In another preferred embodiment of the invention, the composition is capable of undergoing polymerization reaction by UV or sunlight exposure in the presence of non-limiting photoinitiator examples such as Michler's ketone, anthraquinone, acridine, phenazine, benzophenone, Rose Bengal, Eosine, Erythrosine, Hexaarylbiimidazole, p-dialkylamino benzylidene ketone, 3-ketocoumarin, 4-thiazolidinone, 1-indanone, Riboflavin, Eosin-Y, Carboxylated Camphorquinone Acetophenone, Anisoin, Anthraquinone, Anthraquinone-2-sulfonic acid, sodium salt monohydrate, (Benzene) tricarbonylchromium, Benzil, Benzoin, Benzoin ethyl ether, Benzoin isobutyl ether, Benzoin methyl ether, Benzophenone, Benzophenone/1-Hydroxycyclohexylphenyl ketone, 1-Hydroxycyclohexyl phenyl ketone, 3,3',4,4'-Benzophenonetetracarboxylic dianhydride, 4-Benzoylbiphenyl, 2-Benzyl-2-(dimethylamino)-4'-morpholinobutyrophenone, 4,4'-Bis(diethylamino)benzophenone, 4,4'-Bis(dimethylamino) benzophenone, Camphorquinone, 2-Chlorothioxanthen-9-one, (Cumene) cyclopentadienyliron(II) hexafluorophosphate, Dibenzosuberenone, 2,2-Diethoxyacetophenone, 4,4'-Dihydroxybenzophenone, 2,2-Dimethoxy-2-phenylacetophenone, 4-(Dimethylamino)benzophenone, 4,4'-Dimethylbenzil, 2,5-Dimethylbenzophenone, 3,4-Dimethylbenzophenone, Diphenyl (2,4,6trimethylbenzoyl)phosphine oxide / 2-Hydroxy-2-methylpropiophenone, 4'-Ethoxyacetophenone, Diphenyl(2,4,6 trimethylbenzoyl)phosphine oxide, Ethylanthraquinone, Ferrocene, 3'-Hydroxyacetophenone, 4'-Hydroxyacetophenone, 3-Hydroxybenzophenone, 4-Hydroxybenzophenone, 1-Hydroxycyclohexyl phenyl ketone, 2-Hydroxy-2-methylpropiophenone, 2-Hydroxybenzophenone, 3-Methylbenzophenone, Methybenzoylformate, 2-Methyl-4'-(methylthio)-2-morpholinopropiophenone, Phenanthrenequinone, 4'-Phenoxyacetophenone, Thioxanthen-9-one, Triarylsulfonium hexafluoroantimonate salts, Triarylsulfonium hexafluorophosphate salts, 2-Hydroxy-2-methyl-1- phenyl-1-propanone, 2-Hydroxy-1-[4-(2-hydroxyethoxy)phenyl]-2-methyl-1-propanone, Methylbenzoylformate, oxy-phenyl-acetic acid 2-[2 oxo-2 phenyl-acetoxy-ethoxy]-ethyl ester and oxy-phenyl-acetic 2-[2-hydroxy-ethoxy]-ethyl ester, Alpha, alpha-dimethoxy- alpha-phenylacetophenone, 2-Benzyl-2-(dimethylamino)-1-[4- (4-morpholinyl) phenyl]-1-butanone, 2-Methyl-1-[4-(methylthio)phenyl]-2-(4-morpholinyl)-1-propanone, Diphenyl (2,4,6-trimethylbenzoyl)- phosphine oxide, Phosphine oxide, phenyl bis (2,4,6-trimethyl benzoyl), Bis (eta 5-2,4-cyclopentadien-1-yl) Bis [2,6-difluoro-3-(1H-pyrrol-1-yl) phenyl]titanium, lodonium, (4-methylphenyl) [4-(2-methylpropyl) phenyl]- hexafluorophosphate(1-) and all possible mixture of photoinitiators and their modifications.

In another preferred embodiment of the invention, polyols preferred for the composition are selected from di-hydroxy or multi-hydroxy terminated polyesters, polycaprolactone, polycarbonates, polyether's, polydimethylsiloxanes, polyethylene's, polybutadienes and similar polyol derivatives a molecular weight in the range of 1000 to 100000 Dalton and a melting point lower than 150°C but any type of di-hydroxy/multi-hydroxy functional alcohols are also in the scope of the invention.

In another preferred embodiment of the invention, the composition comprises di-isocyanate/multi-isocyanate functional agents, which are selected from mainly commercially available isocyanates such as Hexamethylene diisocyanate, Isochrone diisocyanate, Toluene 2,4-diisocyanate, 1,3-Phenylene diisocyanate, Diphenylmethane 4,4'-diisocyanate, Tolylene-2,4-diisocyanate, Tolylene-2,6-diisocyanate, 1,4-Phenylene diisocyanate, m-Xylylene diisocyanate, trans-1,4-Cyclohexylene diisocyanate, Poly(propylene glycol), tolylene 2,4-diisocyanate terminated, 3,3'-Dimethyl-4,4'-Biphenyl Diisocyanate, 1,4-Diisocyanatobutane, 1,12-Diisocyanatododecane, Tolylene-2,6-diisocyanate, 2-Methyl-m-phenylene diisocyanate, 1,3-Bis(1-isocyanato-1-methylethyl)benzene, 1,3-Bis(isocyanatomethyl) cyclohexane and all related di-isocyanate, multi-isocyanate functional structures and isocyanate functional polymer derivatives.

In another preferred embodiment of the invention, the main UV active components for the obtained polymerizable structures were selected from hydroxy functional polymerizable monomers such as Hydroxyethyl acrylate, Hydroxyethyl methacrylate, N-Hydroxyethyl acrylamide, N-Hydroxyethyl metacrylamide, 2-hydroxypropyl acrylate, 2-hydroxypropyl methacrylate, Hydroxypropyl acrylate Hydroxypropyl methacrylate, 3-Phenoxy 2 hydroxy propyl methacrylate, 3-Phenoxy 2 hydroxy propyl acrylate, Glycerol monomethacrylate, Glycerol monoacrylate, N-(2-Hydroxypropyl)methacrylamide, N-(2-Hydroxypropyl) acrylamide, 4-hydroxybutyl acrylate, 4-hydroxybutyl methacrylate and all related mono, di or multi acrylate/methacrylate and mono/multi hydroxy functional polymerizable monomers.

In another preferred embodiment of the invention, the composition comprises commercially available crosslinkers such as Tripropylene glycol diacrylate (methacrylate), Ethylene Glycol diacrylate (methacrylate), Trimethylolpropane Tri-methacrylate, Polyethylene Glycol 200 Dimethacrylate(acrylate), Polyester acrylates derivatives, Urethane acrylates derivatives and all type of mono, di or multi acrylate/methacrylate.

In another preferred embodiment of the invention, the quaternary ammonium salt of tertiary amine functional monomers is selected from 2-(Dimethylamino)ethyl acrylate (methacrylate) methyl chloride (bromide, iodide, fluoride), (Vinylbenzyl) trimethyl ammonium chloride (bromide, iodide, fluoride), [3-(Methacryloylamino) propyl]trimethylammonium chloride (bromide, iodide, fluoride) and all related derivatives or modifications of quaternary ammonium salt functional monomers but is not limited. Carboxylic acid functional monomers selected from Beta-Carboxyethyl Acrylate, Beta-Carboxyethyl methacrylate, Acrylic acid, Methacrylic acid, Itaconic acid, Maleic acid, carboxylic Acid functional Acrylamide (Methacrylamide)s and all related derivatives or modifications of carboxylic acid or inorganic acid functional monomers.

### Example-1

### Preparation and Polymerization of Tertiary Amine Functional Monomer under the Sunlight:

100g of Dimethyl aminoethyl Methacrylate (DMAEMA) and 3g of 1-Hydroxycyclohexyl phenyl ketone were stirred at 25°C for 0.5 hour to yield slightly yellow liquid. Viscosity = 105 mPa.s. Then, the final product is poured into the Teflon dish in 2mm film thickness and kept under the Sunlight at 25°C for 30 minute to yield crosslinked polymer in solid form.

### Example-2

### Synthesis and Polymerization of Urethane-Acrylates in Tertiary Amine Functional Monomer as Solvent:

160g of Dimethylaminoethyl Methacrylate (DMAEMA), 100g of randomly selected commercially available Polyester-based Polyol (Mw=1000g/mol, OH value= 112 mgKOH/g, Mp=50°C), 33,64g of Hexamethylene diisocyanate, 26g of Hydroxyethyl methacrylate are mixed and stirred at 90°C under the inert atmosphere about 1-1.5 hours until all isocyanate consumed. Reaction was followed by FTIR analysis. Then, the product is cooled down to room temperature and 13g of 1-Hydroxycyclohexyl phenyl ketone is added and stirred at room temperature until total dissolution. Viscosity= 250 mPa.s, Colorless liquid. The final product is poured into the Teflon dish in 2mm film thickness and kept under the Sunlight at 25°C for 5 minutes to yield crosslinked polymer in solid form.

### Example-3

### Preparation and Polymerization of Quarternary Ammonium salts of Tertiary Amine Functional Monomer under the Sunlight:

100g of [2-(Acryloyloxy) ethyl] trimethylammonium chloride, 75g of Acrylic Acid and 5g of 1-Hydroxycyclohexyl phenyl ketone were stirred at 80°C for 1 hour until homogeneous mixture obtained. Then, the product cooled down to room temperature to yield colorless liquid. Viscosity = 150 mPa.s. Solid Content = 99%. The final product is poured into the Teflon dish in 2mm film thickness and kept under the Sunlight at 25°C for 1 minute to yield crosslinked polymer in solid form.

The composition of the present invention is a synthetic concept to produce UV or sunlight curable compositions described herein and their possible modifications, substitutions and derivatives have clear potential to find applications in limitless area, thus, the present invention is not intended to be exhaustive or to limit the invention to the precise forms or applications.

Other possible embodiments of the invention will be apparent to those skilled in the art upon consideration of this finding or from practice of the invention disclosed herein.

## Claims

1. A visible light curable composition enabling the curing process of polymerizable structures under the ultraviolet light and sunlight exposure by using any type of photoinitiator, comprising:
- at least one tertiary amine functional polymerizable monomer,
- **characterized in that** the tertiary amine functional polymerizable monomer is selected to behave as main monomer and also photopolymerization promotor/synergist for chain transfer reaction under the ultraviolet light or sunlight exposure to form network polymers in the presence of any type of photoinitiator.

2. A visible light curable composition as claimed in claim 1, wherein the composition is suitable for curing of polymerizable structures without using visible light activated photoinitiators.

3. A visible light curable composition as claimed in claim 1, wherein the composition comprises at least one quaternary salts of tertiary amines functional polymerizable monomer.

4. A visible light curable composition as claimed in claim 1, wherein the composition is suitable for using the tertiary amine monomer as solvent to synthesise monomeric, oligomeric and polymeric urethane-acrylate structures used in water and solvent free sunlight curable compositions.

5. A visible light curable composition as claimed in claim 1, wherein the composition enables the polymerization of the tertiary amine functional polymerizable monomer to start under the sunlight and to stop in the dark.

6. A visible light curable composition as claimed in claim 1, wherein the composition is suitable for obtaining thermoset/thermoplastic coatings or polymers such as 2K polyurethanes and epoxy systems by providing one component system with controllability on polymerization.

7. A visible light curable composition as claimed in claim 1, wherein the tertiary amine functional polymerizable monomer is selected from 2-N-Morpholinoethyl methacrylate, 2-N-Morpholinoethyl acrylate, 2-Diisopropylaminoethyl methacrylate, 2-Diisopropylaminoethyl acrylate, N-[3-(N,N-Dimethylamino)propyl] methacrylamide, N-[3-(N,N-Dimethylamino)propyl] acrylamide, N-[2-(N,N-Dimethylamino)ethyl] methacrylamide, N-[2-(N,N-Dimethylamino)ethyl] acrylamide, 2-(N,N-Dimethylamino)ethyl acrylate, 2-(N,N-Dimethylamino)ethyl methacrylate, 2-(N,N-Diethylamino)ethyl methacrylate, 2-(N,N-Diethylamino)ethyl acrylate, 2-(tert-Butylamino)ethyl methacrylate, 2-(tert-Butylamino)ethyl acrylate, 2-(N,N-Dimethylamino)ethyl methacrylate, 2-(N,N-Dimethylamino)ethyl acrylate, and all related monomers, oligomers and polymers.

8. A visible light curable composition as claimed in claim 1, wherein the photoinitiator is selected from Michler's ketone, anthraquinone, acridine, phenazine, benzophenone, Rose Bengal, Eosine, Erythrosine, Hexaarylbiimidazole, p-dialkylamino benzylidene ketone, 3-ketocoumarin, 4-thiazolidinone, 1-indanone, Riboflavin, Eosin-Y, Carboxylated Camphorquinone Acetophenone, Anisoin, Anthraquinone, Anthraquinone-2-sulfonic acid, sodium salt monohydrate, (Benzene) tricarbonylchromium, Benzil, Benzoin, Benzoin ethyl ether, Benzoin isobutyl ether, Benzoin methyl ether, Benzophenone, Benzophenone/1-Hydroxycyclohexylphenyl ketone, 1-Hydroxycyclohexyl phenyl ketone, 3,3',4,4'-Benzophenonetetracarboxylic dianhydride, 4-Benzoylbiphenyl, 2-Benzyl-2-(dimethylamino)-4'-morpholinobutyrophenone, 4,4'-Bis(diethylamino)benzophenone, 4,4'-Bis(dimethylamino) benzophenone, Camphorquinone, 2-Chlorothioxanthen-9-one, (Cumene) cyclopentadienyliron(ll) hexafluorophosphate, Dibenzosuberenone, 2,2-Diethoxyacetophenone, 4,4'-Dihydroxybenzophenone, 2,2-Dimethoxy-2-phenylacetophenone, 4-(Dimethylamino)benzophenone, 4,4'-Dimethylbenzil, 2,5-Dimethylbenzophenone, 3,4-Dimethylbenzophenone, Diphenyl (2,4,6trimethylbenzoyl)phosphine oxide / 2-Hydroxy-2-methylpropiophenone, 4'-Ethoxyacetophenone, Diphenyl(2,4,6 trimethylbenzoyl)phosphine oxide, Ethylanthraquinone, Ferrocene, 3'-Hydroxyacetophenone, 4'-Hydroxyacetophenone, 3-Hydroxybenzophenone, 4-Hydroxybenzophenone, 1-Hydroxycyclohexyl phenyl ketone, 2-Hydroxy-2-methylpropiophenone, 2-Hydroxybenzophenone, 3-Methylbenzophenone, Methybenzoylformate, 2-Methyl-4'-(methylthio)-2-morpholinopropiophenone, Phenanthrenequinone, 4'-Phenoxyacetophenone, Thioxanthen-9-one, Triarylsulfonium hexafluoroantimonate salts, Triarylsulfonium hexafluorophosphate salts, 2-Hydroxy-2-methyl-1- phenyl-1-propanone, 2-Hydroxy-1-[4-(2-hydroxyethoxy)phenyl]-2-methyl-1-propanone, Methylbenzoylformate, oxy-phenyl-acetic acid 2-[2 oxo-2 phenyl-acetoxy-ethoxy]-ethyl ester and oxy-phenyl-acetic 2-[2-hydroxy-ethoxy]-ethyl ester, Alpha, alpha-dimethoxy- alpha-phenylacetophenone, 2-Benzyl-2-(dimethylamino)-1-[4- (4-morpholinyl) phenyl]-1-butanone, 2-Methyl-1-[4-(methylthio)phenyl]-2-(4-morpholinyl)-1-propanone, Diphenyl (2,4,6-trimethylbenzoyl)- phosphine oxide, Phosphine oxide, phenyl bis (2,4,6-trimethyl benzoyl), Bis (eta 5-2,4-cyclopentadien-1-yl) Bis [2,6-difluoro-3-(1H-pyrrol-1-yl) phenyl]titanium, lodonium, (4-methylphenyl) [4-(2-methylpropyl) phenyl]- hexafluorophosphate(1-) and all possible mixture of photoinitiators and their modifications.

9. A visible light curable composition as claimed in claim 1, wherein the composition comprises di-isocyanate/multi-isocyanate functional agents, which are selected from mainly commercially available isocyanates such as Hexamethylene diisocyanate, Isochrone diisocyanate, Toluene 2,4-diisocyanate, 1,3-Phenylene diisocyanate, Diphenylmethane 4,4'-diisocyanate, Tolylene-2,4-diisocyanate, Tolylene-2,6-diisocyanate, 1,4-Phenylene diisocyanate, m-Xylylene diisocyanate, trans-1,4-Cyclohexylene diisocyanate, Poly(propylene glycol), tolylene 2,4-diisocyanate terminated, 3,3'-Dimethyl-4,4'-Biphenyl Diisocyanate, 1,4-Diisocyanatobutane, 1,12-Diisocyanatododecane, Tolylene-2,6-diisocyanate, 2-Methyl-m-phenylene diisocyanate, 1,3-Bis(1-isocyanato-1-methylethyl)benzene, 1,3-Bis(isocyanatomethyl) cyclohexane and all related di-isocyanate, multi-isocyanate functional structures and isocyanate functional polymer derivatives.

10. A visible light curable composition as claimed in claim 1, wherein the main ultraviolet active components for obtaining polymerizable structures were selected from hydroxy functional polymerizable monomers such as Hydroxyethyl acrylate, Hydroxyethyl methacrylate, N-Hydroxyethyl acrylamide, N-Hydroxyethyl metacrylamide, 2-hydroxypropyl acrylate, 2-hydroxypropyl methacrylate, Hydroxypropyl acrylate Hydroxypropyl methacrylate, 3-Phenoxy 2 hydroxy propyl methacrylate, 3-Phenoxy 2 hydroxy propyl acrylate, Glycerol monomethacrylate, Glycerol monoacrylate, N-(2-Hydroxypropyl)methacrylamide, N-(2-Hydroxypropyl) acrylamide, 4-hydroxybutyl acrylate, 4-hydroxybutyl methacrylate and all related mono, di or multi acrylate/methacrylate and mono/multi hydroxy functional polymerizable monomers.

11. A visible light curable composition as claimed in claim 1, wherein the composition comprises commercially available crosslinkers such as Tripropylene glycol diacrylate (methacrylate), Ethylene Glycol diacrylate (methacrylate), Trimethylolpropane Tri-methacrylate, Polyethylene Glycol 200 Di-methacrylate(acrylate), Polyester acrylates derivatives, Urethane acrylates derivatives and all type of mono, di or multi acrylate/methacrylate.

12. A visible light curable composition as claimed in claim 3, 4 , wherein the quaternary ammonium salt of tertiary amine functional monomer is selected from 2-(Dimethylamino)ethyl acrylate (methacrylate) methyl chloride (bromide, iodide, fluoride), (Vinylbenzyl) trimethyl ammonium chloride (bromide, iodide, fluoride), [3-(Methacryloylamino) propyl]trimethylammonium chloride (bromide, iodide, fluoride) and all related derivatives or modifications of quaternary ammonium salt functional monomers but is not limited. Carboxylic acid functional monomers selected from Beta-Carboxyethyl Acrylate, Beta-Carboxyethyl methacrylate, Acrylic acid, Methacrylic acid, Itaconic acid, Maleic acid, carboxylic Acid functional Acrylamide (Methacrylamide)s and all related derivatives or modifications of carboxylic acid or inorganic acid functional monomers.

13. A method of preparing a visible light curable composition as claimed in any one of the preceding claims wherein the visible light curable composition is cured by using any type of photoinitiator, the method comprising the steps of:
- using the tertiary amines monomer as solvent to synthesis various different monomeric, oligomeric and polymeric urethane-acrylate structures,
- obtaining visible light curable composition,
- **characterized in that** the composition is water and solvent free.

14. A method of polymerization of a composition as claimed in any one of the preceding claims wherein the visible light curable composition is cured by using any type of photoinitiator, the method comprising the steps of:
- adding at least one tertiary amine functional polymerizable monomer and at least one photoinitiator,
- selecting the tertiary amine functional polymerizable monomer as main monomer and photopolymerization promoter,
- curing the composition under the ultraviolet light or sunlight exposure,
- initiating and starting chain transfer reaction under the ultraviolet light or sunlight exposure to form network polymers and obtaining crosslinked polymers,
- **characterized in that** the photoinitiator is not a visible light activated photoinitiator.

15. A method of polymerization of a composition as claimed in claim 13, comprising the step of obtaining derivatives of the end product by adding and changing the ratio and type of polyols, isocyanates, hydroxy functional monomers, tertiary amine functional monomers and photoinitiators in the composition or by mixing commercially available crosslinkers and other types of additives to the composition to polymerize by using thermal radical initiator or redox polymerization technics.

16. A method of polymerization of a composition as claimed in claim 14, comprising the step of adding a quaternary ammonium salt of a tertiary amine functional monomer in combination with a carboxylic acid functional monomer to form deep eutectic solvents which are a new class of green electrolyte materials with properties analogous to that of ionic liquids.

17. A method of polymerization of a composition as claimed in claim 16, wherein the solvents comprise [2-(Acryloyloxy)ethyl] trimethylammonium chloride as hydrogen acceptor and Acrylic Acid as hydrogen donor components to obtain all-component-polymerizable deep eutectic solvents at room temperature.

18. A method of polymerization of a composition as claimed in claim 16, comprising the step of obtaining thermoset/thermoplastic polymers having ionic interactions inside the polymeric networks by using the deep eutectic solvents.

19. A method of polymerization of a composition as claimed in claim 16, comprising the step of using the deep eutectic solvents compositions as solvent before the curing process and dissolving various additives, materials, polymers to obtain thermoset / thermoplastic polymers and composites.

20. A method of polymerization of a composition as claimed in claim 14, comprising the step of utilizing the tertiary amine functional polymerizable monomer as a solvent for the synthesis of the monomeric, oligomeric and polymeric acrylate-urethane-based crosslinkers and after completion of the reactions, the tertiary amine monomer, which is not eliminated, is used as a monomer in the polymerization composition.

21. A method of polymerization of a composition as claimed in claim 14, comprising the step of using the tertiary amine functional monomers as catalyst in the urethane synthesis.

22. A method of polymerization of a composition as claimed in claim 15, wherein the polyols are selected from di-hydroxy or multi-hydroxy terminated polyesters, polycaprolactone, polycarbonates, polyether's, polydimethylsiloxanes, polyethylene's, polybutadienes and similar polyol derivatives having a molecular weight in the range of 1000 to 100000 Dalton and a melting point lower than 150°C and from any type of di-hydroxy/multi-hydroxy functional alcohols.

## Patentansprüche

1. Eine unter sichtbarem Licht härtbare Zusammensetzung, die den Aushärtungsprozess polymerisierbarer Strukturen unter ultravioletter Strahlung und Sonnenlichtexposition unter Verwendung beliebiger Photoinitiatoren ermöglicht, umfassend:
- mindestens ein tertiäres aminfunktionelles polymerisierbares Monomer,
- **dadurch gekennzeichnet, dass** das tertiäraminfunktionelle polymerisierbare Monomer so ausgewählt ist, dass es als Hauptmonomer und zugleich als Photopolymerisationspromotor/Synergist für die Kettenübertragungsreaktion unter ultravioletter Strahlung oder Sonnenlichtexposition wirkt, um Netzwerkpolymere in Gegenwart beliebiger Photoinitiatoren zu bilden.

2. Die gemäß Anspruch 1 beanspruchte unter sichtbarem Licht härtbare Zusammensetzung, **dadurch gekennzeichnet, dass** die Zusammensetzung zum Aushärten polymerisierbarer Strukturen geeignet ist, ohne sichtlichtaktivierte Photoinitiatoren zu verwenden.

3. Die gemäß Anspruch 1 beanspruchte unter sichtbarem Licht härtbare Zusammensetzung, **dadurch gekennzeichnet, dass** die Zusammensetzung mindestens ein quartäres Salz eines tertiäraminfunktionellen polymerisierbaren Monomers umfasst.

4. Die gemäß Anspruch 1 beanspruchte unter sichtbarem Licht härtbare Zusammensetzung, **dadurch gekennzeichnet, dass** die Zusammensetzung zur Verwendung des tertiäraminfunktionellen Monomerlösungsmittels geeignet ist, um monomere, oligomere und polymere Urethan-Acrylat-Strukturen zu synthetisieren, die in wasser- und lösungsmittelfreien, durch Sonnenlicht härtbaren Zusammensetzungen verwendet werden.

5. Die gemäß Anspruch 1 beanspruchte unter sichtbarem Licht härtbare Zusammensetzung, **dadurch gekennzeichnet, dass** die Zusammensetzung die Polymerisation des tertiäraminfunktionellen polymerisierbaren Monomers unter Sonnenlichteinstrahlung initiiert und im Dunkeln stoppt.

6. Die gemäß Anspruch 1 beanspruchte unter sichtbarem Licht härtbare Zusammensetzung, **dadurch gekennzeichnet, dass** die Zusammensetzung geeignet ist, durch Bereitstellung eines Einkomponentensystems mit kontrollierbarer Polymerisation Thermoset-/Thermoplast-Beschichtungen oder -Polymere wie 2K-Polyurethane und Epoxysysteme zu erhalten.

7. Die gemäß Anspruch 1 beanspruchte unter sichtbarem Licht härtbare Zusammensetzung, **dadurch gekennzeichnet, dass** das tertiäraminfunktionelle polymerisierbare Monomer ausgewählt ist aus 2-N-Morpholinoethylmethacrylat, 2-N-Morpholinoethylacrylat, 2-Diisopropylaminoethylmethacrylat, 2-Diisopropylaminoethylacrylat, N-[3-(N,N-Dimethylamino)propyl]methacrylamid, N-[3-(N,N-Dimethylamino)propyl]acrylamid, N-[2-(N,N-Dimethylamino)ethyl]methacrylamid, N-[2-(N,N-Dimethylamino)ethyl]acrylamid, 2-(N,N-Dimethylamino)ethylacrylat, 2-(N,N-Dimethylamino)ethylmethacrylat, 2-(N,N-Diethylamino)ethylmethacrylat, 2-(N,N-Diethylamino)ethylacrylat, 2-(tert-Butylamino)ethylmethacrylat, 2-(tert-Butylamino)ethylacrylat, 2-(N,N-Dimethylamino)ethylmethacrylat, 2-(N,N-Dimethylamino)ethylacrylat und alle damit zusammenhängenden Monomere, Oligomere und Polymere.

8. Die gemäß Anspruch 1 beanspruchte unter sichtbarem Licht härtbare Zusammensetzung, **dadurch gekennzeichnet, dass** der Photoinitiator ausgewählt ist aus Michlers Keton, Anthrachinon, Acridin, Phenazin, Benzophenon, Rose Bengal, Eosin, Erythrosin, Hexaarylbiimidazol, p-Dialkylamino-Benzyliden-Keton, 3-Ketokumarin, 4-Thiazolidinon, 1-Indanon, Riboflavin, Eosin-Y, Carboxyliertes Campherquinon-Acetophenon, Anisoin, Anthrachinon, Anthrachinon-2-sulfonsäure, Natriumsalz-Monohydrat, (Benzol)tricarbonylchrom, Benzil, Benzoin, Benzoin-Ethyl-Ether, Benzoin-Isobutyl-Ether, Benzoin-Methyl-Ether, Benzophenon, Benzophenon/1-Hydroxycyclohexylphenyl-Keton, 1-Hydroxycyclohexylphenyl-Keton, 3,3',4,4'-Benzophenontetracarboxylanhydrid, 4-Benzoylbiphenyl, 2-Benzyl-2-(dimethylamino)-4'-morpholinobutyrophenon, 4,4'-Bis(diethylamino)benzophenon, 4,4'-Bis(dimethylamino)benzophenon, Campherquinon, 2-Chlorothioxanthen-9-on, (Cumol)Cyclopentadienyliron(II)-Hexafluorphosphat, Dibenzosuberenon, 2,2-Diethoxyacetophenon, 4,4'-Dihydroxybenzophenon, 2,2-Dimethoxy-2-phenylacetophenon, 4-(Dimethylamino)benzophenon, 4,4'-Dimethylbenzil, 2,5-Dimethylbenzophenon, 3,4-Dimethylbenzophenon, Diphenyl(2,4,6-trimethylbenzoyl)phosphinoxid / 2-Hydroxy-2-methylpropiophenon, 4'-Ethoxyacetophenon, Diphenyl(2,4,6-trimethylbenzoyl)phosphinoxid, Ethylanthrachinon, Ferrocene, 3'-Hydroxyacetophenon, 4'-Hydroxyacetophenon, 3-Hydroxybenzophenon, 4-Hydroxybenzophenon, 1-Hydroxycyclohexylphenyl-Keton, 2-Hydroxy-2-methylpropiophenon, 2-Hydroxybenzophenon, 3-Methylbenzophenon, Methylbenzoylformiat, 2-Methyl-4'-(methylthio)-2-morpholinopropiophenon, Phenanthrenquinon, 4'-Phenoxyacetophenon, Thioxanthen-9-on, Triarylsulfonium-Hexafluoroantimonatsalze, Triarylsulfonium-Hexafluorphosphatsalze, 2-Hydroxy-2-methyl-1-phenyl-1-propanon, 2-Hydroxy-1-[4-(2-hydroxyethoxy)phenyl]-2-methyl-1-propanon, Methylbenzoylformiat, Oxy-phenyl-essigsäure-2-[2-oxo-2-phenyl-acetoxy-ethoxy]-ethylester und Oxy-phenyl-essigsäure-2-[2-hydroxy-ethoxy]-ethylester, Alpha,alpha-dimethoxy-alpha-phenylacetophenon, 2-Benzyl-2-(dimethylamino)-1-[4-(4-morpholinyl)phenyl]-1-butanon, 2-Methyl-1-[4-(methylthio)phenyl]-2-(4-morpholinyl)-1-propanon, Diphenyl(2,4,6-trimethylbenzoyl)-phosphinoxid, Phosphinoxid, Phenyl bis(2,4,6-trimethylbenzoyl), Bis(eta5-2,4-cyclopentadien-1-yl)Bis[2,6-difluoro-3-(1H-pyrrol-1-yl)phenyl]Titan, lodonium, (4-Methylphenyl)[4-(2-Methylpropyl)phenyl]-Hexafluorphosphat(I-) und alle möglichen Mischungen von Photoinitiatoren sowie deren Modifikationen.

9. Die gemäß Anspruch 1 beanspruchte unter sichtbarem Licht härtbare Zusammensetzung, **dadurch gekennzeichnet, dass** die Zusammensetzung Diisocyanat-/Multiisocyanat-funktionelle Wirkstoffe umfasst, die hauptsächlich aus kommerziell erhältlichen Isocyanaten ausgewählt sind, wie z.B. Hexamethylendiisocyanat, Isochron-Diisocyanat, Toluol-2,4-Diisocyanat, 1,3-Phenylendiisocyanat, Diphenylmethan-4,4'-Diisocyanat, Toluylen-2,4-Diisocyanat, Toluylen-2,6-Diisocyanat, 1,4-Phenylendiisocyanat, m-Xylolendiisocyanat, trans-1,4-Cyclohexylendiisocyanat, Poly(propylenglykol), toluylen-2,4-Diisocyanat terminiert, 3,3'-Dimethyl-4,4'-Biphenyl-Diisocyanat, 1,4-Diisocyanatbutan, 1,12-Diisocyanatdodecan, Toluylen-2,6-Diisocyanat, 2-Methyl-m-Phenylendiisocyanat, 1,3-Bis(1-Isocyanato-1-methylethyl)benzol, 1,3-Bis(Isocyanatomethyl)cyclohexan und alle damit zusammenhängenden Diisocyanat-, Multiisocyanat-funktionellen Strukturen sowie Isocyanat-funktionelle Polymerderivate.

10. Die gemäß Anspruch 1 beanspruchte unter sichtbarem Licht härtbare Zusammensetzung, **dadurch gekennzeichnet, dass** die Haupt ultravioletaktivierten Komponenten zur Herstellung polymerisierbarer Strukturen aus hydroxyfunktionellen polymerisierbaren Monomeren ausgewählt sind, wie z.B. Hydroxyethylacrylat, Hydroxyethylmethacrylat, N-Hydroxyethylacrylamid, N-Hydroxyethylmethacrylamid, 2-Hydroxypropylacrylat, 2-Hydroxypropylmethacrylat, Hydroxypropylacrylat, Hydroxypropylmethacrylat, 3-Phenoxy-2-hydroxypropylmethacrylat, 3-Phenoxy-2-hydroxypropylacrylat, Glycerolmonomethacrylat, Glycerolmonoacrylat, N-(2-Hydroxypropyl)methacrylamid, N-(2-Hydroxypropyl)acrylamid, 4-Hydroxybutylacrylat, 4-Hydroxybutylmethacrylat und alle damit zusammenhängenden mono-, di- oder multiacrylat-/methacrylat- sowie mono-/multi-hydroxyfunktionellen polymerisierbaren Monomere.

11. Die gemäß Anspruch 1 beanspruchte unter sichtbarem Licht härtbare Zusammensetzung, **dadurch gekennzeichnet, dass** die Zusammensetzung kommerziell erhältliche Vernetzer wie Tripropylenglykol-Diacrylat (Methacrylat), Ethylenglykol-Diacrylat (Methacrylat), Trimethylolpropantri-methacrylat, Polyethylenglykol-200-Dimethacrylat (Acrylat), Polyesteracrylat-Derivate, Urethanacrylat-Derivate sowie alle Arten von mono-, di- oder multiacrylat-/methacrylat-Verbindungen umfasst.

12. Die gemäß Anspruch 1 beanspruchte unter sichtbarem Licht härtbare Zusammensetzung, **dadurch gekennzeichnet, dass** das quartäre Ammoniumsalz des tertiäraminfunktionellen Monomers ausgewählt ist aus 2-(Dimethylamino)ethylacrylat (Methacrylat) Methylchlorid (Bromid, lodid, Fluorid), (Vinylbenzyl)trimethylammoniumchlorid (Bromid, lodid, Fluorid), [3-(Methacryloylamino)propyl]trimethylammoniumchlorid (Bromid, Iodid, Fluorid) sowie allen damit zusammenhängenden Derivaten oder Modifikationen von quartären Ammoniumsalzfunktionellen Monomeren, jedoch nicht darauf beschränkt. Die gemäß Anspruch 1 beanspruchte unter sichtbarem Licht härtbare Zusammensetzung, **dadurch gekennzeichnet, dass** die carboxylfunktionellen Monomere ausgewählt sind aus Beta-Carboxyethylacrylat, Beta-Carboxyethylmethacrylat, Acrylsäure, Methacrylsäure, Itaconsäure, Maleinsäure, carboxylfunktionelle Acrylamide (Methacrylamide) sowie allen damit zusammenhängenden Derivaten oder Modifikationen von carboxyl- oder anorganisch säurefunktionellen Monomeren.

13. Ein Verfahren zur Herstellung einer unter sichtbarem Licht härtbaren Zusammensetzung gemäß einem der vorhergehenden Ansprüche, **dadurch gekennzeichnet, dass** die unter sichtbarem Licht härtbare Zusammensetzung unter Verwendung eines beliebigen Typs von Photoinitiator gehärtet wird, wobei das Verfahren die folgenden Schritte umfasst:
- Verwendung des tertiäraminfunktionellen Monomers als Lösungsmittel zur Synthese verschiedener monomerer, oligomerer und polymerer Urethan-Acrylat-Strukturen,
- Herstellung der unter sichtbarem Licht härtbaren Zusammensetzung,
- **dadurch gekennzeichnet, dass** die Zusammensetzung wasser- und lösungsmittelfrei ist.

14. Ein Verfahren zur Polymerisation einer Zusammensetzung gemäß einem der vorhergehenden Ansprüche, **dadurch gekennzeichnet, dass** die unter sichtbarem Licht härtbare Zusammensetzung unter Verwendung eines beliebigen Typs von Photoinitiator gehärtet wird, wobei das Verfahren die folgenden Schritte umfasst:
- Zugabe von mindestens einem tertiäraminfunktionellen polymerisierbaren Monomer und mindestens einem Photoinitiator,
- Auswahl des tertiäraminfunktionellen polymerisierbaren Monomers als Hauptmonomer und Photopolymerisationspromotor,
- Härten der Zusammensetzung unter ultravioletter Licht oder Sonneneinstrahlung,
- Einleiten und Starten der Kettenübertragungsreaktion unter ultravioletter Licht- oder Sonneneinstrahlung zur Bildung von Netzwerkpolymeren und zur Gewinnung vernetzter Polymere,
- **dadurch gekennzeichnet, dass** der Photoinitiator kein unter sichtbarem Licht aktivierter Photoinitiator ist.

15. Ein Verfahren zur Polymerisation einer Zusammensetzung gemäß Anspruch, umfassend den Schritt der Gewinnung von Derivaten des Endprodukts durch Zugabe und Veränderung des Verhältnisses und Typs von Polyolen, Isocyanaten, hydroxyfunktionellen Monomeren, tertiäraminfunktionellen Monomeren und Photoinitiatoren in der Zusammensetzung oder durch Mischung kommerziell erhältlicher Vernetzer und anderer Zusatzstoffe in die Zusammensetzung, um die Polymerisation unter Verwendung eines thermischen Radikalinitiators oder nach Redox-Polymerisationstechniken durchzuführen.

16. Ein Verfahren zur Polymerisation einer Zusammensetzung gemäß Anspruch 14, umfassend den Schritt der Zugabe eines quartären Ammoniumsalzes des tertiäraminfunktionellen Monomers in Kombination mit einem carboxylfunktionellen Monomer zur Bildung von Tiefen-Eutektischen-Lösungsmitteln, die eine neue Klasse grüner Elektrolytmaterialien darstellen und Eigenschaften aufweisen, die denen von Ionischen Flüssigkeiten ähneln.

17. Ein Verfahren zur Polymerisation einer Zusammensetzung gemäß Anspruch 16, **dadurch gekennzeichnet, dass** die Lösungsmittel [2-(Acryloyloxy)ethyl]trimethylammoniumchlorid als Wasserstoffakzeptor und Acrylsäure als Wasserstoffdonor-Komponenten umfassen, um bei Raumtemperatur allkomponentenpolymerisierbare Tiefen-Eutektischen-Lösungsmitteln zu erhalten.

18. Ein Verfahren zur Polymerisation einer Zusammensetzung gemäß Anspruch 16, umfassend den Schritt der Gewinnung von Thermoplasten/Thermosets mit ionischen Wechselwirkungen innerhalb der polymeren Netzwerke durch Verwendung die Tiefen-Eutektischen-Lösungsmitteln.

19. Ein Verfahren zur Polymerisation einer Zusammensetzung gemäß Anspruch 16, umfassend den Schritt der Verwendung derTiefen-Eutektischen-Lösungsmitteln-Zusammensetzungen als Lösungsmittel vor dem Härtungsprozess und zum Lösen verschiedener Additive, Materialien und Polymere, um Thermoset-/Thermoplast-Polymere und Verbundwerkstoffe zu erhalten.

20. Ein Verfahren zur Polymerisation einer Zusammensetzung gemäß Anspruch 14, umfassend den Schritt der Verwendung des tertiäraminfunktionellen polymerisierbaren Monomers als Lösungsmittel für die Synthese monomerer, oligomerer und polymerer, auf Acrylat-Urethan basierender Vernetzer und nach Abschluss der Reaktionen wird das nicht entfernte tertiäraminische Monomer als Monomer in der Polymerisationszusammensetzung verwendet.

21. Ein Verfahren zur Polymerisation einer Zusammensetzung gemäß Anspruch 14, umfassend den Schritt der Verwendung der tertiäraminfunktionellen Monomere als Katalysator bei der Urethan-Synthese.

22. Ein Verfahren zur Polymerisation einer Zusammensetzung gemäß Anspruch 15, **dadurch gekennzeichnet, dass** die Polyole ausgewählt sind aus dihydroxy- oder multihydroxy-terminierten Polyestern, Polycaprolacton, Polycarbonaten, Polyether, Polydimethylsiloxanen, Polyethylenen, Polybutadienen und ähnlichen Polyolderivaten mit einem Molekulargewicht im Bereich von 100.000 Dalton und einem Schmelzpunkt unter 150 °C sowie aus dihydroxy-/multihydroxy-funktionellen Alkoholen.

## Revendications

1. Une composition durcissable par lumière visible permettant le processus de durcissement de structures polymérisables sous exposition à la lumière ultraviolette et à la lumière du soleil, en utilisant tout type de photoinitiateur, comprenant:
- au moins un monomère polymérisable fonctionnel à amine tertiaire,
- **caractérisée en ce que** le monomère polymérisable fonctionnel à amine tertiaire est choisi pour agir à la fois comme monomère principal et comme promoteur/synergiste de photopolymérisation pour la réaction de transfert de chaîne sous exposition à la lumière ultraviolette ou à la lumière du soleil, afin de former des polymères en réseau en présence de tout type de photoinitiateur.

2. Une composition durcissable par lumière visible selon la revendication 1, dans laquelle la composition est adaptée au durcissement de structures polymérisables sans utiliser de photoinitiateurs activés par lumière visible.

3. Une composition durcissable par lumière visible selon la revendication 1, dans laquelle la composition comprend au moins un sel quaternaire de monomère polymérisable fonctionnel à amine tertiaire.

4. Une composition durcissable par lumière visible selon la revendication 1, dans laquelle la composition est adaptée à l'utilisation du monomère amine tertiaire comme solvant pour synthétiser des structures uréthane-acrylate monomériques, oligomériques et polymériques utilisées dans des compositions durcissables à la lumière du soleil, sans eau ni solvant.

5. Une composition durcissable par lumière visible selon la revendication 1, dans laquelle la composition permet à la polymérisation du monomère polymérisable fonctionnel à amine tertiaire de démarrer sous l'exposition à la lumière du soleil et de s'arrêter dans l'obscurité.

6. Une composition durcissable par lumière visible selon la revendication 1, dans laquelle la composition est adaptée à l'obtention de revêtements ou de polymères thermodurcissables/thermoplastiques, tels que des polyuréthanes 2K et des systèmes époxy, en fournissant un système monocomposant avec contrôle de la polymérisation.

7. Une composition durcissable par lumière visible selon la revendication 1, dans laquelle le monomère polymérisable fonctionnel à amine tertiaire est choisi parmi 2-N-morpholinoéthyl méthacrylate, 2-N-morpholinoéthyl acrylate, 2-diisopropylaminoéthyl méthacrylate, 2-diisopropylaminoéthyl acrylate, N-[3-(N,N-diméthylamino)propyl] méthacrylamide, N-[3-(N,N-diméthylamino)propyl] acrylamide, N-[2-(N,N-diméthylamino)éthyl] méthacrylamide, N-[2-(N,N-diméthylamino)éthyl] acrylamide, 2-(N,N-diméthylamino)éthyl acrylate, 2-(N,N-diméthylamino)éthyl méthacrylate, 2-(N,N-diéthylamino)éthyl méthacrylate, 2-(N,N-diéthylamino)éthyl acrylate, 2-(tert-butylamino)éthyl méthacrylate, 2-(tert-butylamino)éthyl acrylate, 2-(N,N-diméthylamino)éthyl méthacrylate, 2-(N,N-diméthylamino)éthyl acrylate, ainsi que tous les monomères, oligomères et polymères associés.

8. Une composition durcissable par lumière visible selon la revendication 1, dans laquelle le photoinitiateur est choisi parmi Michler's ketone, anthraquinone, acridine, phénazine, benzophénone, Rose Bengal, Eosine, Érythrosine, Hexaarylbiimidazole, p-dialkylamino benzylidène cétone, 3-cétocoumarine, 4-thiazolidinone, 1-indanone, Riboflavine, Eosin-Y, Camphorquinone acétophénone carboxylée, Anisoin, Anthraquinone, Anthraquinone-2-acide sulfonique, sel de sodium monohydraté, (Benzène) tricarbonylchromium, Benzil, Benzoin, éther éthylique de Benzoin, éther isobutyle de Benzoin, éther méthylique de Benzoin, Benzophénone, Benzophénone/1-hydroxycyclohexylphényl cétone, 1-hydroxycyclohexyl phényl cétone, 3,3',4,4'-dianhydride tétracarboxylique de Benzophénone, 4-Benzoylbiphényle, 2-Benzyl-2-(diméthylamino)-4'-morpholinobutyrophénone, 4,4'-Bis(diéthylamino)benzophénone, 4,4'-Bis(diméthylamino)benzophénone, Camphorquinone, 2-Chlorothioxanthen-9-one, (Cumène) cyclopentadiényle fer(II) hexafluorophosphate, Dibenzosubérénone, 2,2-Diéthoxyacétophénone, 4,4'-Dihydroxybenzophénone, 2,2-Diméthoxy-2-phénylacétophénone, 4-(Diméthylamino)benzophénone, 4,4'-Diméthylbenzil, 2,5-Diméthylbenzophénone, 3,4-Diméthylbenzophénone, Diphényl(2,4,6-triméthylbenzoyl)oxyde de phosphine / 2-Hydroxy-2-méthylpropiophénone, 4'-Éthoxyacétophénone, Diphényl(2,4,6-triméthylbenzoyl)oxyde de phosphine, Éthylanthraquinone, Ferrocène, 3'-Hydroxyacétophénone, 4'-Hydroxyacétophénone, 3-Hydroxybenzophénone, 4-Hydroxybenzophénone, 1-Hydroxycyclohexyl phényl cétone, 2-Hydroxy-2-méthylpropiophénone, 2-Hydroxybenzophénone, 3-Méthylbenzophénone, Méthylbenzoylformate, 2-Méthyl-4'-(méthylthio)-2-morpholinopropiophénone, Phénanthrenequinone, 4'-Phénylacétophénone, Thioxanthen-9-one, sels de triarylsulfonium hexafluoroantimonate, sels de triarylsulfonium hexafluorophosphate, 2-Hydroxy-2-méthyl-1-phényl-1-propanone, 2-Hydroxy-1-[4-(2-hydroxyéthoxy)phényl]-2-méthyl-1-propanone, Méthylbenzoylformate, ester oxy-phénylacétique 2-[2 oxo-2 phénylacétoxy-éthoxy]-éthyle et ester oxy-phénylacétique 2-[2-hydroxy-éthoxy]-éthyle, Alpha, alpha-diméthoxy-alpha-phénylacétophénone, 2-Benzyl-2-(diméthylamino)-1-[4-(4-morpholinyl)phényl]-1-butanone, 2-Méthyl-1-[4-(méthylthio)phényl]-2-(4-morpholinyl)-1-propanone, Diphényl (2,4,6-triméthylbenzoyl)-oxyde de phosphine, oxyde de phosphine, phényl bis (2,4,6-triméthylbenzoyl), Bis (η5-2,4-cyclopentadién-1-yl) Bis [2,6-difluoro-3-(1H-pyrrol-1-yl)phényl]titane, lodonium, (4-méthylphényl) [4-(2-méthylpropyl)phényl]-hexafluorophosphate(1-) et tous les mélanges possibles de photoinitiateurs et leurs modifications.

9. Une composition durcissable par lumière visible selon la revendication 1, dans laquelle la composition comprend des agents fonctionnels di-isocyanates/multi-isocyanates, choisis principalement parmi les isocyanates disponibles dans le commerce tels que l'hexaméthylène diisocyanate, isochrone diisocyanate, toluène 2,4-diisocyanate, 1,3-phénylène diisocyanate, diphénylméthane 4,4'-diisocyanate, tolylène-2,4-diisocyanate, tolylène-2,6-diisocyanate, 1,4-phénylène diisocyanate, m-xylène diisocyanate, trans-1,4-cyclohexylène diisocyanate, poly(propylène glycol) terminé par tolylène 2,4-diisocyanate, 3,3'-diméthyl-4,4'-biphényle diisocyanate, 1,4-diisocyanatobutane, 1,12-diisocyanatododécane, tolylène-2,6-diisocyanate, 2-méthyl-m-phénylène diisocyanate, 1,3-bis(1-isocyanato-1-méthyléthyl)benzène, 1,3-bis(isocyanatométhyl)cyclohexane, ainsi que toutes les structures fonctionnelles di-isocyanates, multi-isocyanates et les dérivés polymères fonctionnels d'isocyanate.

10. Une composition durcissable par lumière visible selon la revendication 1, dans laquelle les principaux composants actifs aux UV pour l'obtention de structures polymérisables sont choisis parmi les monomères polymérisables fonctionnels hydroxy tels que l'acrylate d'hydroxyéthyle, le méthacrylate d'hydroxyéthyle, N-hydroxyéthyl acrylamide, N-hydroxyéthyl méthacrylamide, l'acrylate de 2-hydroxypropyle, le méthacrylate de 2-hydroxypropyle, l'acrylate d'hydroxypropyle, le méthacrylate d'hydroxypropyle, 3-phénoxy-2-hydroxypropyl méthacrylate, 3-phénoxy-2-hydroxypropyl acrylate, glycérol monométhacrylate, glycérol monoacrylate, N-(2-hydroxypropyl)methacrylamide, N-(2-hydroxypropyl)acrylamide, 4-hydroxybutyl acrylate, 4-hydroxybutyl méthacrylate, ainsi que tous les monomères, oligomères et polymères acrylate/méthacrylate mono-, di- ou multi-fonctionnels et tous les monomères polymérisables fonctionnels hydroxy mono- ou multi-fonctionnels associés.

11. Une composition durcissable par lumière visible selon la revendication 1, dans laquelle la composition comprend des réticulants disponibles dans le commerce tels que le tripropylène glycol diacrylate (méthacrylate), le glycol éthylène diacrylate (méthacrylate), triméthylolpropane tri-méthacrylate, polyéthylène glycol 200 di-méthacrylate (acrylate), des dérivés d'acrylates polyester, des dérivés d'acrylates uréthane, ainsi que tous types de monomères, di- ou multi-acrylates/méthacrylates.

12. Une composition durcissable par lumière visible selon la revendication 1, dans laquelle le sel d'ammonium quaternaire du monomère fonctionnel amine tertiaire est choisi parmi 2-(diméthylamino)éthyl acrylate (méthacrylate) chlorure (bromure, iodure, fluorure), (vinylbenzyl) triméthylammonium chlorure (bromure, iodure, fluorure), [3-(méthacryloylamino)propyl]triméthylammonium chlorure (bromure, iodure, fluorure), ainsi que tous les dérivés ou modifications associés des monomères fonctionnels de sel d'ammonium quaternaire, sans que la liste ne soit limitative. Des monomères fonctionnels acides carboxyliques choisis parmi le β-acrylate carboxyéthyle, le β-méthacrylate carboxyéthyle, l'acide acrylique, l'acide méthacrylique, l'acide itaconique, l'acide maléique, les acrylamides (méthacrylamides) fonctionnels acides carboxyliques, ainsi que tous les dérivés ou modifications associés de monomères fonctionnels acides carboxyliques ou acides inorganiques.

13. Un procédé de préparation d'une composition durcissable par lumière visible selon l'une quelconque des revendications précédentes, dans lequel la composition durcissable par lumière visible est durcie en utilisant tout type de photoinitiateur, le procédé comprenant les étapes suivantes:
- utilisation du monomère amine tertiaire comme solvant pour synthétiser diverses structures uréthane-acrylate monomériques, oligomériques et polymériques,
- obtenir la composition durcissable par lumière visible,
- **caractérisé en ce que** la composition est exempte d'eau et de solvant.

14. Un procédé de polymérisation d'une composition selon l'une quelconque des revendications précédentes, dans lequel la composition durcissable par lumière visible est durcie en utilisant tout type de photoinitiateur, le procédé comprenant les étapes suivantes:
- ajout d'au moins un monomère polymérisable fonctionnel amine tertiaire et d'au moins un photoinitiateur,
- sélection du monomère polymérisable fonctionnel amine tertiaire comme monomère principal et promoteur de photopolymérisation,
- durcissement de la composition sous exposition aux rayons ultraviolets ou à la lumière solaire,
- initiation et démarrage de la réaction de transfert de chaîne sous exposition aux rayons ultraviolets ou à la lumière solaire afin de former des polymères en réseau et d'obtenir des polymères réticulés,
- **caractérisé en ce que** le photoinitiateur n'est pas un photoinitiateur activé par lumière visible.

15. Un procédé de polymérisation d'une composition selon la revendication, comprenant l'étape d'obtention de dérivés du produit final en ajoutant et en modifiant le ratio et le type de polyols, d'isocyanates, de monomères fonctionnels hydroxy, de monomères fonctionnels amine tertiaire et de photoinitiateurs dans la composition, ou en mélangeant des réticulants disponibles dans le commerce et d'autres types d'additifs à la composition afin de polymériser en utilisant un initiateur radicalaire thermique ou des techniques de polymérisation par oxydoréduction.

16. Un procédé de polymérisation d'une composition selon la revendication 14, comprenant l'étape d'ajout d'un sel d'ammonium quaternaire de monomère fonctionnel amine tertiaire en combinaison avec un monomère fonctionnel acide carboxylique afin de former des solvants eutectiques profonds, qui constituent une nouvelle classe de matériaux électrolytiques verts présentant des propriétés analogues à celles des liquides ioniques.

17. Un procédé de polymérisation d'une composition selon la revendication 16, dans lequel les solvants comprennent [2-(acryloyloxy)éthyl] chlorure de triméthylammonium comme accepteur d'hydrogène et l'acide acrylique comme donneur d'hydrogène afin d'obtenir des solvants eutectiques profonds entièrement polymérisables à température ambiante.

18. Un procédé de polymérisation d'une composition selon la revendication 16, comprenant l'étape d'obtention de polymères thermodurcissables/thermoplastiques présentant des interactions ioniques à l'intérieur des réseaux polymériques en utilisant les solvants eutectiques profonds.

19. Un procédé de polymérisation d'une composition selon la revendication 16, comprenant l'étape d'utilisation des compositions de solvants eutectiques profonds comme solvant avant le processus de durcissement et de dissolution de divers additifs, matériaux et polymères afin d'obtenir des polymères thermodurcissables/thermoplastiques et des composites.

20. Un procédé de polymérisation d'une composition selon la revendication 14, comprenant l'étape d'utilisation du monomère polymérisable fonctionnel amine tertiaire comme solvant pour la synthèse des réticulants monomériques, oligomériques et polymériques à base d'acrylate-urée et, après l'achèvement des réactions, le monomère amine tertiaire, qui n'est pas éliminé, est utilisé comme monomère dans la composition de polymérisation.

21. Un procédé de polymérisation d'une composition selon la revendication 14, comprenant l'étape d'utilisation des monomères fonctionnels amine tertiaire comme catalyseur dans la synthèse de l'uréthane.

22. Un procédé de polymérisation d'une composition selon la revendication 15, dans lequel les polyols sont choisis parmi les polyesters à terminaison dihydroxy ou multihydroxy, la polycaprolactone, les polycarbonates, les polyéthers, polydiméthylsiloxanes, polyéthylènes, polybutadiènes et dérivés de polyols similaires ayant un poids moléculaire compris entre 100 000 et 200 000 daltons et un point de fusion inférieur à 150 °C, et d'alcools à fonction dihydroxy/polyhydroxy.
